# EUROPEAN PATENT SPECIFICATION

(11) **EP 2 783 085 B1**
(45) Date of publication and mention of the grant of the patent: **07.03.2018**
(21) Application number: 11876200.4
(22) Date of filing: 25.11.2011
(51) Int. Cl.: F01N 3/28, B01D 53/94, F01N 3/021, F01N 3/022, F01N 3/035, B01J 35/04, B01J 23/40

(54) **PURIFIER ASSEMBLY**
REINIGUNGSANORDNUNG
ENSEMBLE PURIFICATEUR

(43) Date of publication of application: 01.10.2014
(73) Proprietor: Dinex Ecocat OY, 41331 Vihtavuori (FI)
(72) Inventor: MAUNULA, Teuvo, FI-90230 Oulu (FI); MATILAINEN, Pekka, FI-40520 Jyväskylä (FI); TORKKELL, Keijo, FI-40630 Jyväskylä (FI); KINNUNEN, Toni, FI-90440 Kempele (FI)
(74) Representative: Berggren Oy, Helsinki & Oulu
(86) International application number: PCT/FI2011/051041
(87) International publication number: WO 2013/076354

(56) References cited:
- EP-A1- 0 821 145
- WO-A1-92/05860
- WO-A1-2010/149692
- WO-A1-2011/001027
- DE-A1- 3 504 694
- DE-A1- 4 339 025
- US-A- 4 731 229
- US-A1- 2008 113 209
- US-B2- 6 663 839
- US-B2- 7 468 166

## Description

### Background art

The invention relates to a particle filter used in the treatment of exhaust gases. The invention also relates to a method for manufacturing and using such a particle filter. The removal of the carbon fraction requires a longer residence time in the filter or the catalyst. A known continuous regenerating trap (CRT) method includes a Pt-bearing oxidation catalyst and following it an uncoated or catalyst-coated DPF (EP341832). Problems in the passive method with the conventional filter are related to situations where the creation of NO₂ is not sufficient e.g. when driving in rush-hour traffic, and the method requires a fuel with very low sulphur content (S<10 ppm) for minimising the creation of sulphate in the efficient and expensive Pt-bearing oxidation catalyst. The blocking of the DPF cannot be accepted in any situation, because it will interrupt driving. Consequently, most particle filters include active regeneration, which principle has already been applied for several decades. The use of modern adjusting technique with engine control enables active regeneration in the DPF. Irrespective of the regeneration of carbon, unburned ashes are accumulated in the DPF the quantity of which must be taken into account as regards dimensioning, lubricant recommendations and possible maintenance operations.

In addition to the conventional cellular particle filter of the wall flow type, assemblies are also known made of steel wool, of ceramic foam, as a tapered structure, as a pipe structure coated with fibre, see for example WO92/05860A1, using electrostatic separation or wet cleaners. In known filter assemblies, on top of perforated pipe structures is wrapped fibre matting or metal wool and one or more of these structures can be installed in the whole filter assembly. It is typical that the fibre structure is uniform without intermediate spaces and the flow is controlled in the structure randomly avoiding fibre threads, the average main direction being radial. This is typical for filters based on deep filtration in which particles partially accumulate within the filter material. Usually, exhaust gas flows in these filters in the radial direction towards the inside of the pipe, whereby particles have sufficient room to accumulate within, on the surface of and in the open space of the assembly before the filter.

The assembly of partial filters has been modified of the oxidation catalyst such that the separation of particles is promoted by using, instead of a ceramic or metal cell, assemblies which include various pass-through openings, claws or projections on the walls as well as throttles or filtering elements in the flow channels of the cell. The pass-through openings or filtering elements have been provided by employing ceramic or metal meshes, wools or porous materials instead of the normal metal or ceramic walls. Partial filters usually have a cellular structure which includes axial open channels in the main flow direction. The main flow is similar to the one of normal catalyst assemblies, but particle separation has been enhanced by forcing the flow to partially travel in the radial direction via meshes, fibres or holes in the wall controlled by a pressure difference. However, the radial flow is usually random in different directions, whereby a vector in the direction of the main flow is on average axial. The basic principle is also that the flow enters from one end and exits on the opposite side from the other end of the cell which is usually circular or rectangular.

### Description of invention

The object of this invention is to provide a particle filter for exhaust gas, which substantially minimises the quantity of emission components in exhaust gas and is technically very stable also in demanding conditions, too.

In the present description, the expression purifier assembly is used to designate the particle filter. To reach this object, the invention is characterised by features which are presented in the independent claims. The other claims present some advantageous embodiments of the invention.

The particle filter according to the invention comprises at least one perforated structure, and around said perforated structure there is at least one mesh structure comprising at least two corrugated mesh sheet layers, whose corrugation direction to each other is from 1 to 90 degrees and said corrugated mesh sheet layers are forming spiral like flow channels between said mesh sheet layers, and at least in part of the spiral like channels formed by said mesh sheet layers, there is fibrous filling material thus filling said spiral like channels, through which the fluid is arranged to flow.

The mesh layers can be two separate meshes or they can be formed from e.g. a structurally continuous mesh wrapped around itself. Said perforated structure and said mesh structure can be separate structures or they can be joined together or they can made from same structure elements, e.g. by continuously wrapping mesh sheet around itself.

The greatest volume and thus the easiest fluid flow channel in the structure is the space between the meshes. Because a corrugation angle of at least one mesh is advantageously diverging from the main flow, the fluid is able to circulate the open channel spirally around the perforated structure and the mesh structure. The mesh structure comprises channels formed by a mesh layers in which the flow is also able to travel sideways. Said meshes are corrugated and at least one mesh has a corrugation angle diverging from the main flow, the fluid is thus able to openly flow to one of the channels between the corrugation peaks.

Fibrous filling material remarkable increases the efficiency of the purifier assembly by minimising the quantity of emission components in exhaust gas. It reduces both large particles and small particles. It also adjusts the flow direction in said purifier assembly. Fibrous filling material can be in one layer or in several layers. It can be in inlet area, middle area and/or in outlet area of said purifier assembly. Fibrous filling material can be placed in inner or in outer circles of said purifier assembly. Corrugation structure together with fibrous filling material, which fills those spiral like flow channels, forms very efficiency and stable structure. It also adds stability of structures by bonding and locking corrugated mesh sheet layers better to each other. Pressure loss of fresh purifier assembly is very small, e.g. from 10% to 20%, which also improves total efficiency when used with engines.

According to an object of the invention, said fibrous filling material is silica fibre. This provides the advantage that it is very stable. In certain embodiments and conditions it can also react with chemicals giving thus also functional advantage.

According to an object of the invention, said perforated structure is selected from the group consisting corrugated mesh sheet, corrugated smooth sheet, perforated corrugated sheet, perforated smooth sheet, perforated pipe. They share and balance the loading to fibrous filling material and improve the efficiency of the purifier assembly.

According to an object of the invention, inside said perforated structure there is open structure. This balances the loading to perforated structure. In certain embodiments open structure can be used as exhaust silencer, too.

According to an object of the invention, inside said perforated structure there is a mesh sheet structure. This shares and balances the loading to fibrous filling material and improves the efficiency of the purifier assembly. In addition this balances the loading to perforated structure. It also improves improve the volumetric efficiency of the purifier assembly. This structure also has the advantage that although more particles accumulate in the structure, fibrous filling material can clog but the main route is still open. Said perforated structure and said mesh structure inside said perforated structure can be separate structures or they can be joined together or they can made from same structure elements, e.g. by continuously wrapping mesh sheet around itself. Said perforated structure, said mesh structure around said perforated structure and said mesh structure inside said perforated structure can be separate structures or they can be joined together or they can made from same structure elements, e.g. by continuously wrapping mesh sheet around itself.

The particle filter according to the invention can be or can be used as an oxygen catalyst or a reduction catalyst. It can then comprise catalytically active compounds, which catalyse the oxidation and/or reduction reaction of exhaust gases. According to an object of the invention, at least part of the mesh structure is coated with support material in which is added catalytically active compounds. This structure is very efficient. This structure also has the advantage that although more particles accumulate in the structure, the holes of the meshes can clog but the main route is still open.

According to an object of the invention, said purifier assembly comprises one or more blocking element in the outlet part to force the fluid to flow through the spiral-like flow channel. This provides the advantage that it forces the fluid to go through the fibrous filling material.

According to an object of the invention, said purifier assembly comprises one or more fibrous filling blocking element in the outlet part. This provides the advantage that that it at least partially forces the fluid to go through fibrous filling material.

According to an object of the invention, that said purifier assembly comprises V-shaped fibrous filling material arranged in reducing or increasing form in said purifier assembly. This focuses flow and adds area of fibrous filling material compared to even structure. It also adds stability of structure by bonding and locking corrugated mesh sheet layers better to each other.

Volume of said fibrous filling material in said mesh structure can be e.g. from 1X to 2X compared to burning volume of engine (cm³/cm³). Amount of said fibrous filling material in said mesh structure can be e.g. from 0.3 to 10 g/dm³. The diameter/hydraulic diameter of the holes of the perforated structure can be e.g. 0.1-100 mm, such as advantageously 1-50 mm, such as e.g. 10-40 mm, and/or the area of the holes is 1-95% of the total area of the whole perforated structure, such as advantageously 10-70%, such as e.g. 20-60%. Mesh structure can comprise holes the size/apparent diameter of which is 0.05-10 mm, such as advantageously 0.1-2 mm.

The purifier assembly according to the invention can be used in the treatment of gases of gasoline direct injection (GDI) engines. The purifier assembly according to the invention can be used in the treatment of diesel-driven engines or petrol-driven engines. The purifier assembly according to the invention provides the advantage that at same time motor efficiency maintains high and the lifetime of the purifier assembly is long-standing due to very stable structure. The purifier assembly has high impurity efficiency, too. Compared to normal filters based on prior art, it has technically simple and stable structure, and the manufacturing and operating costs are low.

A further advantage of the purifier assembly is that the novel type of a particle filter provides smaller pressure loss, reasonable operating efficiency, smaller volume (smaller material consumption) and low manufacturing costs. The purifier assembly can employ a coating which comprises catalytically active components. The purifier assembly according to the invention also provides an efficient catalytic structure in which the flow is forced to circulate spirally between the mesh sheets around the perforated structure but is also able to travel through the mesh.

According to an object of the invention, by changing the hole size and thread thickness of the mesh, it is possible to adjust the flow direction i.e. how much of it goes spirally around and how much of it goes directly through the mesh. When more particles accumulate in the structure, the holes of the meshes can clog but the spiral route is still open. Instead of the mesh, it is possible to use some other perforated sheet, mesh coated with sintered metal, fibre matting, membrane or filter paper by means of which it is possible to form an equivalent flow channel. In this specification, this element is designated with the general term of mesh structure. Holes in these materials are equivalent to the eyes of the mesh in the later examples. Instead of the mesh, it is also possible to combine two or more materials to provide the structure. For example, it is possible to combine mesh and perforated sheet/foil which are corrugated and wound fast in each other around a perforated structure, such as a perforated pipe.

According to an object of the invention, the mesh structure also comprises one or more non-corrugated mesh foils, perforated foils, perforated sheets, meshes, fibre mattings, paper sheets and/or membranes. Instead of the mesh pair, it is possible to wrap the structure of several different meshes or structures. Instead of one mesh, there can be a whole foil which forces the flow to totally circulate on the spiral route. If many meshes are used, they can start at different points of the perforated structure, whereby gas is able to access directly two or more spiral-like channels from which the fluid can also be carried through the mesh. Pressure difference at different points of the structure decides the flow route of the fluid. One or more mesh structures can be located in parallel with each other, whereby a very long structure can be provided. Parallel meshes can also partially overlap or there is a separate clamping and blocking element between them, whereby the fluid circulates separately in each element.

According to an object of the invention, the corrugation height in the mesh structure can be selected suitable for the target as regards the assembly, counterpressure and emission limits. The corrugation height can be the same or different in various meshes. The height can be varied between 0.2-200 mm, advantageously it is between 0.8-3 mm. Even a small corrugation angle creates an open flow channel, which differs from the case of mesh having been wrapped directly as a sheet around the pipe. According to an object of the invention, the corrugation angle in relation to the main flow in either direction is at least in one mesh 1-90 degrees, such as 10-80 degrees, such as advantageously between 20-60 degrees. The corrugation angle can also be varied between -90 - +90 degrees, advantageously it is between -60 - -20 and +20 - +60 degrees. The minus and plus angles mean angles in the opposite directions in relation to the main flow direction. It is practical to use the same slantly corrugated mesh material, make a mesh pair of them by turning one of the meshes inside out such that the corrugation peaks are in different directions and carrying against each other. Then, an assembly according to the invention is provided of the same mesh. By using the mesh structure, it is possible to wrap the slantly corrugated cell partially against the corrugation peaks directly against the perforated structure. The ratio of the height and width of the corrugation can be varied at a very large range, using either low and wide corrugations or high and narrow corrugation peaks.

According to an object of the invention, the peak height of the corrugated mesh is between 0.2-200 mm, advantageously 0.8-3 mm. Within the advantageous range, the counterpressure, the cohesion and the volume of the corrugated mesh are provided suitable for practical targets. According to an object of the invention, it is possible to use other peak heights in special targets: very dirty targets → large peak height, very clean targets and when using little meshes → small peak height. It is also possible to optimise in a small space with a very small peak height an efficient purifier assembly in which the counterpressure in the open channel is considerably higher than with greater peak height. The higher counterpressure in the open channel provides that a greater part of the fluid goes through the holes of the mesh.

According to an object of the invention, the mesh structure comprises threads the thickness of which is 0.1-5 mm, advantageously between 0.1-1 mm, and holes the size of which (apparent diameter/hydraulic diameter from mesh to mesh at the middle of the meshwork) is 0.05-10 mm, advantageously 0.1-2 mm. The mesh can be a woven structure or a mesh matting or otherwise cohering.

According to an object of the invention, the size of the holes in the mesh is between 0.05-10 mm, advantageously between 0.1-2 mm. The great variation is due to the fact that there are very different targets of usage or intended uses. In very dirty targets, the mesh is coarser and the corrugation height is great and, in clean targets, the mesh is denser and the corrugation height small. As it is also possible to use various layers around the perforated sheet, very different properties are required. If using foil or perforated foil instead of metal mesh, its thickness is in the same range as the thickness of the thread i.e. between 0.01-5 mm, advantageously between 0.02-0.2 mm. According to an object of the invention, it is possible to use a mesh made of a very thin thread and/or large eyes for the corrugated mesh and a very dense mesh for the straight mesh, whereby it is possible to wind the mesh at a very large corrugation angle (40-80 degrees). Instead of or together with the mesh, it is also possible to use above-mentioned fibre sheets or membranes of which an equivalent structure is made and they partially allow fluid through.

An embodiment is an assembly in the inner circle of which the mesh is clamped and closed and the flow thus cannot immediately access the housing from beside the pipe. In the outer circle, the mesh is then partially open to the housing, whereby clogging is prevented in specific situations. One or both of the ends can obviously be not closed, but then the fluid is easily able to by-pass mainly the spiral structure immediately beside the pipe out or in, the counterpressure controlling the relative flow volumes.

According to an object of the invention, both ends of the mesh are totally closed, one fast in the perforated sheet and the other in the outer circle. Then, the fluid is forced to penetrate the mesh and cannot circulate the open spiral channel, but a space remains between the meshes in which particles can accumulate. Another advantage is that a great part of the mesh threads are not fast in each other but regularly separated from each other by corrugation. The fluid has a better possibility to touch the threads and more volume (collection volume, turbulent volume) is provided in the structure than by wrapping the mesh matting directly around the pipe. In open spaces, turbulence is created which enhances, inter alia, the separation of particles.

An embodiment is to construct a very elongated perforated structure, in the example a perforated pipe, around which is wrapped a mesh structure. Consequently is provided a large open flow area which correlates with the surface area of the perforated pipe. Thus, fluid (exhaust gas) is able to circulate between the meshes in a wide area, which can decrease relative counterpressure. In such a case, the diameter of the housing does not have to be larger than the outer diameter of the catalyst and so many mesh layers are not required as in the narrower version. If the same catalyst quantity is installed as in the narrow version, the number of layers around the perforated pipe is equivalently decreased. The conversions of gaseous components coarsely follow the catalyst quantity. The long and narrow structure can also be integrated into the piping and it mostly looks like a pipe with a casing. The length of the structure could be e.g. 30-200 cm for an engine of about two liters. The long structure can also be assembled of parallel elements weld-ed/connected together. There can be clamping rings at the end of each element or not until the ends of the whole mesh.

The mesh of the purifier assembly is fastened around the perforated structure with the above clamping rings, but additionally it is possible to use welding, soldering, a thicker support mesh around the mesh coil or a metal nail or pin pushed through a larger mesh which can be fast in the inner pipe. Instead of the clamping and blocking ring, the ends can have been welded. The clamping ring is usually welded to the other structure.

According to an object of the invention, the mesh structure can be coated with porous support material which operates as a base for active compounds which oxidise CO, hydrocarbons, NO, hydrogen, ammonia or coal. The hydrocarbons can also include functional groups containing oxygen, nitrogen or halogens. According to an object of the invention, the coating is made such that the mesh holes remain at least partially open at least in one mesh. Advantageously in some embodiments, all the holes are substantially open. This provides the advantage that in the open channel the fluid is able to go through the mesh at every point, whereby particles remain on the surface of the mesh with great filtering efficiency. The fluid is driven to change to the other channel by the pressure difference between the channels, which provides efficient mass transport past the catalyst surface on the surface of the mesh.

An assembly according to an object of the invention does not have a coating at all, whereby it only operates as a particle separator and sound damper. Furthermore or alternatively, the catalyst can catalyse the reduction of NOₓ with hydrocarbons or ammonia, adsorb nitrogen oxides (reduction in rich conditions) or oxidise ammonia.

Typically, the catalyst comprises in the support material aluminium, silicon, titanium oxides and/or zeolites. The thickness of the coating is between 1-500 micrometres, advantageously between 5-40 micrometres. The area of the coating is determined by used materials and is between 1-700 m²/g, usually between 20-300 m²/g. The coating can be added to the purifier assembly of various sludges, sols and/or solutions by dipping, pumping, sucking and/or spraying. The meshes can be coated open when loose of its pair by spraying and, after that, wind the mesh and catalyst structure. Consequently, it is possible to ensure that the eyes of the mesh remain open. The coating can also be made totally or partially by means of volatile starting materials (CVD, ALE techniques).

According to an object of the invention, at least part of the mesh structure is coated with support material in which is added catalytically active compounds. According to an object of the invention, the catalytically active compounds catalyse the oxidation and/or reduction reaction of exhaust and waste gases. According to an object of the invention, the support material comprises aluminium oxide, silicon oxide, titanium oxide, zeolite, zirconium oxide and/or cerium oxide.

According to an object of the invention, the catalytically active compounds include platinum, palladium, rhodium, iridium, ruthenium and/or vanadium, catalyse the oxidation and/or reduction reaction of exhaust and waste gases.

According to an object of the invention, there are in the flow direction upstream or downstream of the purifier assembly one or more catalysts or operational units such as an oxidation catalyst, a particle filter, a reduction catalyst of nitrogen oxides and/or some other unit used for purifying refuse gases.

As active metals can be used e.g. noble metals such as platinum (Pt), palladium (Pd), iridium (Ir) and/or rhodium (Rh) and/or ruthenium (Ru). The active components can be added in the coated catalyst structure by absorbing (dry, wet or chemisorption) or among coating sludge, solution or sol. The active components can be pre-matched in the particles of materials before coating. The coatings and/or absorptions employ water or other solvents or their mixtures usually in the liquid phase.

There can be active metal (e.g. noble metal) in the purifier assembly for 0.01-10 g/dm³, advantageously 0.1-3 g/dm³. If there are several structures successively in the flow direction, the first can include active metal advantageously for 0.8-3 g/dm³ and the latter 0-0.8 g/dm³. It is also possible to make an assembly the inner circle of which comprises a mesh containing active component and the outer circle including very little active component or not at all on the surface of the mesh (can also be without coating). The division of the active component in the mesh can also be inversed: Pt more in the outer circle and less in the inner circle. The aim is to add to the same structure e.g. Pt more on the inlet side in the direction of the flow where it is possible to make more NO₂. On the outlet side, Pt cannot catalyse the oxidation of NO as much, whereby there the charge is lower. On the outlet side, there can also be other active components such as Pd. This structure can be used together with the oxidation catalyst being upstream.

The active component is selected according to the use. Platinum-bearing catalyst coatings can enhance the formation of NO₂, which promotes the combustion of particles and the regeneration of the purifier e.g. in diesel targets. Decreasing the formation of NO₂ is an object in targets in which the regeneration is done totally actively (fuel injection and/or engine throttling) and when wishing to minimise NO₂ emissions. Pd can be employed as an active component when the object of the catalyst coating is to catalyse the oxidation of CO and HCs and the temperatures are high in the operating or regeneration conditions. When the gas mixture is stoichiometric or rich (λ≤1), rhodium and/or palladium is used for stability, selectivity and NOₓ reduction.

As promoters in the support material can be used e.g. vanadium (V), wolfram (W), iron (Fe), zirconium (Zr), cerium (Ce), lanthanum (La), manganese (Mn), cobalt, barium, strontium and/or nickel (Ni). The support material can also mainly consist of these promoters. In the coating, it is possible to add typical NOₓ adsorption compounds e.g. by absorbing, whereby nitrogen oxides can be adsorbed in lean mixture and reduced during rich mixture.

A purifier coated with catalyst according to the invention can be treated during manufacture in static or dynamic conditions with oxidising and/or reducing gas mixtures which can include air, oxygen, hydrogen, carbon monoxide, ammonia, exhaust gas, hydrocarbons, water or inert gas. With the treatments, it is also possible to form various mixed oxides between the coating compounds by employing suitable starting materials, particle sizes and finishing conditions.

The purifier according to the invention is thus able to decrease the emissions of refuse gases. By utilising sufficiently dense mesh, low corrugation height and several layers of the mesh or an equivalent structure, good particle separating efficiency is also provided. The assembly is a novel kind of a partial filter structure for diesel targets, among others. This assembly is particularly well suited for the purification of the exhaust gases of small diesel engines in which it is integrateable directly to the sound-damper structure. The purifier also replaces normal elements used in sound damping. At its best, the purifier can be located in the same original sound damper, whereby no change is visible on the outside and no redesigning problems occur in the target of usage. As the flow has been forced onto the spiral route, the filtering capacity is better with the same total volume than when the same meshes were wound as a cell and the flow conveyed through the created cell from one end to the other. The assembly according to the invention provides great separating efficiency for the used mesh material and with relatively great corrugation height due to the forced spiral route.

For the regeneration of particles accumulated in the purifier, it is possible to use passive or active methods. In exhaust gases comprising an excess of oxygen, in front of the purifier assembly can be installed an oxidation catalyst (DOC) which oxidises CO, HCs and NO. Forming NO₂ slowly oxidises coal-based particles. The DOC can be located in the same container or it is separate in front of a container according to the invention. The DOC can also be within the inlet or outlet pipe. The oxidation catalyst coating can also be in a structure in an inlet according to the invention and another structure uncoated or containing less active compounds according to the invention in the outlet. The temperature of the catalyst can also be increased externally by combusting hydrocarbons or by utilising other exothermic (heat-forming) reactions. Additional heat is provided by feeding fuel among the exhaust gas and/or by post-injection in the engine. At the same time, it is possible to decrease the volume of combustion air (by decreasing A/F ratio). It is also possible to provide additional heat for the regeneration of the catalyst structure by electric heating, burners and/or plasma and/or some other method heating the structure and/or soot. The accumulation of particles can be promoted with electrostatic methods, by using mesh pairs as charged collection meshes and by insulating the meshes from the other structure and each other. For the regeneration of particles, it is also possible to use additives which enhance the combustion of soot (FBC = fuel-born catalyst) which include e.g. Fe, Sr and/or Ce-based compounds. The purifier assembly can also be coated with known compounds catalysing the combustion of soot in which the chemical element is e.g. vanadium, manganese, copper, cerium, iron or alkali/alkali earth metal.

Before the purifier assembly, it is possible to feed in addition to hydrocarbons and known fuels also other oxidising or reducing compounds such as ammonia, urea, ozone, hydrogen peroxide, air, oxygen and/or water as clean or in mixtures. These can promote the reaction of NOₓ and/or particles and the maintenance of the purifier and adjust the stoichiometry of reactions.

### Particular description of invention

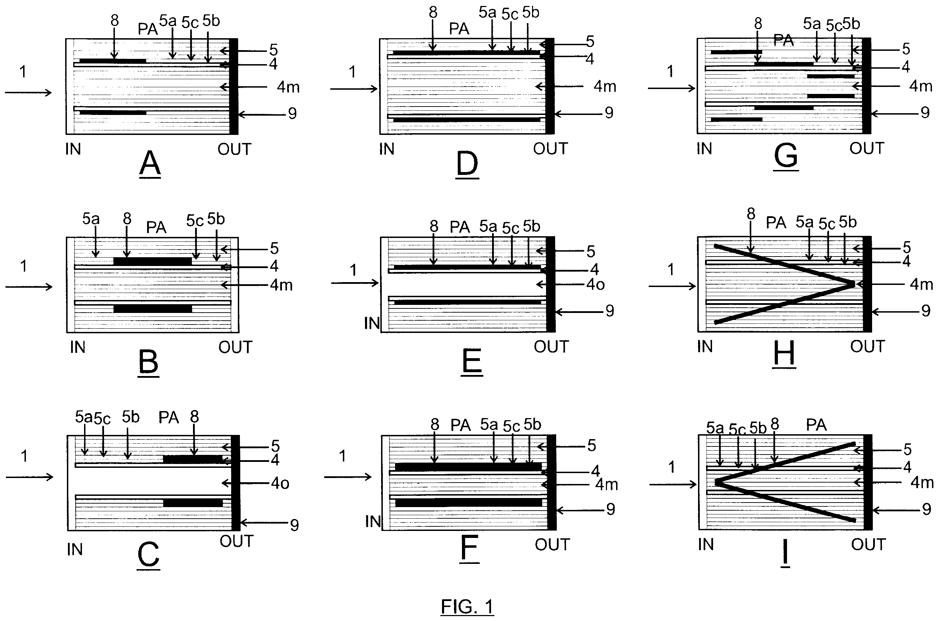

Some embodiments of the invention are described in the following figures and example. Figs. 1A to 1I show some structures according to the invention.

In figures 1A to 1I describes a purifier assembly PA, which comprises perforated structure(s) 4, and around said perforated structure(s) 4 there is mesh structure(s) 5 comprising at least two corrugated mesh sheet layers 5a, 5b, whose corrugation direction to each other is from 1 to 90 degrees and forming spiral like flow channels between said mesh sheets 5a, 5b, and at least in part of the spiral channels 5c formed by said mesh sheet layers 5a, 5b there is fibrous filling material 8 filling said spiral channels 8c, through which the fluid 1 is arranged to flow.

Inside said perforated structure (4) there is open structure (4o) in embodiments described in fig. 1C and 1E. In others there is inside said perforated structure 4 a mesh sheet structure 4m. Fibrous filling material 8 is in fig. 1A in inlet area, 1B middle area and 1C in outlet area. In 1d it is in outer circles and in 1E and 1F in inner circles. In fig. 1G fibrous filling material is stepped both in inlet/outlet area and /outer circle directions. Said purifier assembly PA comprises V-shaped fibrous filling material 8 arranged (fig. 1H) in reducing form in said purifier assembly or (fig. 1I) increasing form in said purifier assembly PA. This focuses flow and adds area of fibrous filling material 8 compared to even structure. It also adds stability of structures 4, 5 by bonding and locking corrugated mesh sheet layers better to each other.

Fluids 1 come to a purifier assembly PA and the fluid are able to openly flow to one of the channels between the corrugation peaks. Due to distribution they go through fibrous filling material 8, too. In purifier assembly PA according to fig. 1 B there is no fibre blocking element 9 in the outlet part OUT. In other embodiments there is fibre blocking element 9 in the outlet part OUT to force the fluid 1 to flow through the spiral-like flow channels 5c.

The purifier assembly PA according to the invention was found to improve the reduction of both large particles and small particles. Using this structure without fibrous filling material, the absolute reduction of particles was found to be 30 to 50% but when using e.g. silica gel as fibrous filling material the absolute reduction of both large particles and small particles was found to increase even 30 to 45% from those values. This increase in reduction of particles is very high and it has essential significance in the treatment of exhaust gas.

## Claims

1. A particle filter for exhaust gas of a combustion engine comprising at least one perforated structure (4), and around said perforated structure (4) there is at least one mesh structure (5) comprising at least two corrugated mesh sheet layers (5a, 5b), whose corrugation direction to each other is from 1 to 90 degrees and forming spiral like flow channels between said mesh sheets (5a, 5b), **characterized in that** at least in part of the spiral channels (5c) formed by said mesh sheet layers (5a, 5b) there is fibrous filling material (8) filling said spiral channels(5c), through which the fluid (1) is arranged to flow.

2. The particle filter according to claim 1, **characterised in that** said fibrous filling material (8) is silica fibre.

3. The particle filter according to claim 1 or 2, **characterised in that** said perforated structure (4) is selected from the group consisting corrugated mesh sheet, corrugated smooth sheet, perforated corrugated sheet, perforated smooth sheet, perforated pipe.

4. The particle filter according to any of claims 1 to 3, **characterised in that** inside said perforated structure (4) there is open structure (4o).

5. The particle filter according to any of claims 1 to 3, **characterised in that** inside said perforated structure (4) there is a mesh sheet structure (4m).

6. The particle filter according to claim 5, **characterised in that** said mesh sheet structure (4m) is an oxygen catalyst or a reduction catalyst.

7. A particle filter according to any one of preceding claims, **characterised in that** said purifier assembly comprises one or more blocking element (9) in the outlet part (OUT) to force the fluid (1) to flow through the spiral-like flow channel (5c).

8. The particle filter according to any one of preceding claims, **characterised in that** said purifier assembly comprises one or more fibre blocking element (9) in the outlet part (OUT) to force the fluid (1) to flow through the spiral-like flow channels (5c).

9. The particle filter according to any one of preceding claims, **characterised in that** that said purifier assembly comprises V-shaped fibrous filling material (8) arranged in reducing or increasing form in said purifier assembly.

10. The particle filter according to any one of preceding claims, **characterised in that** volume of said fibrous filling material (8) in said mesh structure (5) is 1X to 2X compared to burning volume of engine (cm³/cm³).

11. A The particle filter according to any one of preceding claims, **characterised in that** amount of said fibrous filling material (8) in said mesh structure (5) is 0.3 to 10g/dm³.

12. The particle filter according to any one of preceding claims, **characterised in that** the diameter/hydraulic diameter of the holes of the perforated structure (4) is 0.1-100 mm, such as advantageously 1-50 mm, such as e.g. 10-40 mm, and/or the area of the holes is 1-95% of the total area of the whole perforated structure, such as advantageously 10-70%, such as e.g. 20-60%.

13. The particle filter according to any one of preceding claims, **characterised in that** the mesh structure (5) comprises holes the size/apparent diameter of which is 0.05-10 mm, such as advantageously 0.1-2 mm.

14. A method for manufacturing a particle filter for exhaust gas of a combustion engine (1), **characterised in that** in said particle filter is installed at least one perforated structure (4), and around said perforated structure (4) there is installed at least one mesh structure (5) comprising at least two corrugated mesh sheet layers (5a, 5b), whose corrugation direction to each other is from 1 to 90 degrees and forming spiral like flow channels (5c) between said mesh sheets (5a, 5b), and at least in part of spiral channels (5c) formed by said mesh sheet layers (5a, 5b) there is installed fibrous filling material (8), through which the fluid (1) is arranged to flow.

15. The use of a particle filter in the treatment of exhaust or waste gases, **characterised in that** any particle filter according to claims 1-13 is used in the treatment of gases of gasoline direct injection (GDI) engines.

16. The use of a particle filter in the treatment of exhaust or waste gases, **characterised in that** any particle filter according to claims 1-13 is used in the treatment of gases of diesel-driven engines or petrol-driven engines.

## Patentansprüche

1. Partikelfilter für Abgas eines Verbrennungsmotors, umfassend mindestens eine perforierte Struktur (4), wobei um die perforierte Struktur (4) herum mindestens eine Gitterstruktur (5) vorhanden ist, die mindestens zwei gewellte Gitterbahnschichten (5a, 5b) umfasst, deren Wellenrichtung zueinander von 1 bis 90 Grad beträgt und die spiralförmige Strömungskanäle zwischen den Gitterbahnen (5a, 5b) bilden, **dadurch gekennzeichnet, dass** die zumindest in einem Teil der spiralförmigen Kanäle (5c), die durch die Gitterbahnschichten (5a, 5b) gebildet sind, ein faserförmiges Füllmaterial (8) vorhanden ist, das die spiralförmigen Kanäle (5c) füllt, durch die das Fluid (1) strömen kann.

2. Partikelfilter nach Anspruch 1, **dadurch gekennzeichnet, dass** das faserförmige Füllmaterial (8) eine Silicafaser ist.

3. Partikelfilter nach Anspruch 1 oder 2, **dadurch gekennzeichnet, dass** die perforierte Struktur (4) ausgewählt ist aus der Gruppe bestehend aus gewellter Gitterbahn, gewellter glatter Bahn, perforierter gewellter Bahn, perforierter glatter Bahn, perforiertem Rohr.

4. Partikelfilter nach einem der Ansprüche 1 bis 3, **dadurch gekennzeichnet, dass** sich in der perforierten Struktur (4) eine offene Struktur (4o) befindet.

5. Partikelfilter nach einem der Ansprüche 1 bis 3, **dadurch gekennzeichnet, dass** sich in der perforierten Struktur (4) eine Gitterbahnstruktur (4m) befindet.

6. Partikelfilter nach Anspruch 5, **dadurch gekennzeichnet, dass** die Gitterbahnstruktur (4m) ein Sauerstoffkatalysator oder ein Reduktionskatalysator ist.

7. Partikelfilter nach einem der vorhergehenden Ansprüche, **dadurch gekennzeichnet, dass** die Reinigungseinheit ein oder mehrere Sperrelemente (9) im Auslassteil (OUT) umfasst, um das Fluid (1) durch den spiralähnlichen Strömungskanal (5c) strömen zu lassen.

8. Partikelfilter nach einem der vorhergehenden Ansprüche, **dadurch gekennzeichnet, dass** die Reinigungsanordnung ein oder mehrere Fasersperrelemente (9) im Auslassteil (OUT) umfasst, um das Fluid (1) durch den spiralähnlichen Strömungskanal (5c) strömen zu lassen.

9. Partikelfilter nach einem der vorhergehenden Ansprüche, **dadurch gekennzeichnet, dass** die Reinigungsanordnung V-förmiges faseriges Füllmaterial (8) umfasst, das in reduzierender oder erhöhender Form in der Reinigungsanordnung angeordnet ist.

10. Partikelfilter nach einem der vorhergehenden Ansprüche, **dadurch gekennzeichnet, dass** das Volumen des faserförmigen Füllmaterials (8) in der Gitterstruktur (5) 1X bis 2X im Vergleich zum Brennvolumen des Motors (cm³/cm³) beträgt.

11. Partikelfilter nach einem der vorhergehenden Ansprüche, **dadurch gekennzeichnet, dass** die Menge des faserförmigen Füllmaterials (8) in der Gitterstruktur (5) 0,3 bis 10 g/dm³ beträgt.

12. Partikelfilter nach einem der vorhergehenden Ansprüche, **dadurch gekennzeichnet, dass** der Durchmesser/hydraulische Durchmesser der Löcher der perforierten Struktur (4) 0,1 bis 100 mm, vorzugsweise 1 bis 50 mm, wie beispielsweise 10 bis 40 mm beträgt und/oder die Fläche der Löcher 1 bis 95 % der Gesamtfläche der gesamten perforierten Struktur, wie vorteilhafterweise 10 bis 70 %, wie beispielsweise 20 bis 60 % beträgt.

13. Partikelfilter nach einem der vorhergehenden Ansprüche, **dadurch gekennzeichnet, dass** die Gitterstruktur (5) Löcher umfasst, deren Größe/scheinbarer Durchmesser 0,05 bis 10 mm, vorzugsweise 0,1 bis 2 mm beträgt.

14. Verfahren zum Herstellen eines Partikelfilters für Abgas einer Verbrennungskraftmaschine (1), **dadurch gekennzeichnet, dass** in dem Partikelfilter mindestens eine perforierte Struktur (4) installiert ist, wobei um die perforierte Struktur (4) herum mindestens eine Gitterstruktur (5) installiert ist, die mindestens zwei gewellte Gitterbahnschichten (5a, 5b) umfasst, deren Wellenrichtung zueinander von 1 bis 90 Grad beträgt und die spiralförmige Strömungskanäle (5c) zwischen den Gitterbahnen (5a, 5b) bilden, und zumindest in einem Teil der spiralförmigen Kanäle (5c), die durch die Gitterbahnschichten (5a, 5b) gebildet sind, ein faserförmiges Füllmaterial (8) installiert ist, durch das das Fluid (1) strömen kann.

15. Verwendung eines Partikelfilters bei der Behandlung von Auslass- oder Abgasen, **dadurch gekennzeichnet, dass** ein beliebiger Partikelfilter nach Anspruch 1 bis 13 bei der Behandlung von Gasen von Benzin-Direkteinspritzungsmotoren (GDI) verwendet wird.

16. Verwendung eines Partikelfilters bei der Behandlung von Auslass- oder Abgasen, **dadurch gekennzeichnet, dass** ein beliebiger Partikelfilter nach Anspruch 1 bis 13 bei der Behandlung von Gasen von dieselbetriebenen Motoren oder benzinbetriebenen Motoren verwendet wird.

## Revendications

1. Filtre à particules pour les gaz d'échappement d'un moteur à combustion comprenant au moins une structure perforée (4), avec autour de ladite structure perforée (4) au moins une structure maillée (5) comprenant au moins deux couches de feuille maillée ondulée (5a, 5b), dont l'angle entre les directions d'ondulation respectives est compris entre 1 et 90 degrés et formant des canaux d'écoulement de type hélicoïdal entre lesdites feuilles maillées (5a, 5b), **caractérisé en ce que** dans au moins une partie des canaux hélicoïdaux (5c) formés par lesdites couches de feuille maillée (5a, 5b), un matériau de remplissage fibreux (8) remplit lesdits canaux hélicoïdaux (5c), à travers lesquels le fluide (1) peut s'écouler.

2. Filtre à particules selon la revendication 1, **caractérisé en ce que** ledit matériau de remplissage fibreux (8) est de la fibre de silice.

3. Filtre à particules selon la revendication 1 ou 2, **caractérisé en ce que** ladite structure perforée (4) est sélectionnée parmi le groupe constitué par une feuille maillée ondulée, une feuille lisse ondulée, une feuille ondulée perforée, une feuille lisse perforée, et un tuyau perforé.

4. Filtre à particules selon l'une quelconque des revendications 1 à 3, **caractérisé en ce que** l'intérieur de ladite structure perforée (4) comporte une structure ouverte (4o).

5. Filtre à particules selon l'une quelconque des revendications 1 à 3, **caractérisé en ce que** l'intérieur de ladite structure perforée (4) comporte une structure à feuille maillée (4m).

6. Filtre à particules selon la revendication 5, **caractérisé en ce que** ladite structure à feuille maillée (4m) est un catalyseur à oxygène ou un catalyseur de réduction.

7. Filtre à particules selon l'une quelconque des revendications précédentes, **caractérisé en ce que** ledit ensemble purificateur comprend un ou plusieurs éléments de blocage (9) dans la partie de sortie (OUT) pour obliger le fluide (1) à s'écouler à travers le canal d'écoulement de type hélicoïdal (5c).

8. Filtre à particules selon l'une quelconque des revendications précédentes, **caractérisé en ce que** ledit ensemble purificateur comprend un ou plusieurs éléments de blocage à fibre (9) dans la partie de sortie (OUT) pour obliger le fluide (1) à s'écouler à travers les canaux d'écoulement de type hélicoïdal (5c).

9. Filtre à particules selon l'une quelconque des revendications précédentes, **caractérisé en ce que** ledit ensemble purificateur comprend un matériau de remplissage fibreux en forme de V (8) agencé de forme décroissante ou croissante dans ledit ensemble purificateur.

10. Filtre à particules selon l'une quelconque des revendications précédentes, **caractérisé en ce que** le volume dudit matériau de remplissage fibreux (8) dans ladite structure maillée (5) est de 1X à 2X fois le volume de combustion du moteur (cm³/cm³).

11. Filtre à particules selon l'une quelconque des revendications précédentes, **caractérisé en ce que** la quantité dudit matériau de remplissage fibreux (8) dans ladite structure maillée (5) est de 0,3 à 10 g/dm³.

12. Filtre à particules selon l'une quelconque des revendications précédentes, **caractérisé en ce que** le diamètre ou le diamètre hydraulique des trous de la structure perforée (4) est de 0,1 à 100 mm, et avantageusement de 1 à 50 mm, soit par exemple de 10 à 40 mm, et/ou la surface des trous est de 1 à 95 % de la surface totale de la structure perforée complète, et avantageusement de 10 à 70 %, soit par exemple de 20 à 60 %.

13. Filtre à particules selon l'une quelconque des revendications précédentes, **caractérisé en ce que** la structure maillée (5) comprend des trous dont la taille ou le diamètre apparent est de 0,05 à 10 mm, et avantageusement de 0,1 à 2 mm.

14. Procédé de fabrication d'un filtre à particules pour les gaz d'échappement d'un moteur à combustion (1), **caractérisé en ce qu'**au moins une structure perforée (4) est installée dans ledit filtre à particules, avec installée autour de ladite structure perforée (4) au moins une structure maillée (5) comprenant au moins deux couches de feuille maillée ondulée (5a, 5b), dont l'angle entre les directions d'ondulation respectives est compris entre 1 et 90 degrés et formant des canaux d'écoulement de type hélicoïdal (5c) entre lesdites feuilles maillées (5a, 5b), avec installé dans au moins une partie des canaux hélicoïdaux (5c) formés par lesdites couches de feuille maillée (5a, 5b) un matériau de remplissage fibreux (8) à travers lequel peut s'écouler le fluide (1).

15. Utilisation d'un filtre à particules pour le traitement de gaz d'échappement ou de gaz usés, **caractérisé en ce qu'**un filtre à particules quelconque selon les revendications 1 à 13 est utilisé pour le traitement de gaz de moteurs à essence à injection directe (GDI).

16. Utilisation d'un filtre à particules pour le traitement de gaz d'échappement ou de gaz usés, **caractérisé en ce qu'**un filtre à particules quelconque selon les revendications 1 à 13 est utilisé pour le traitement de gaz de moteurs Diesel ou de moteurs à essence.
